# EUROPEAN PATENT SPECIFICATION

(11) **EP 1 042 951 B1**
(45) Date of publication and mention of the grant of the patent: **18.02.2004**
(21) Application number: 00201270.6
(22) Date of filing: 07.04.2000
(51) Int. Cl.: A01F 29/04, A01K 5/00

(54) **Improved screw for shredding and mixing of fibrous products designed for the preparation of feed in zootechnics, and apparatuses equipped with such a screw**
Schnecke zum Schneiden und Mischen von Futter- oder Strohballen und Gerät mit einer solchen Schnecke
Vis mélangeur pour le déchiquetage et le mixage de matériau fibreux pour nourriture animale et appareil équipé de cette vis mélangeur

(30) Priority: 09.04.1999 IT MI990718
(43) Date of publication of application: 11.10.2000
(73) Proprietor: OFFICINE SGARIBOLDI S.n.c. di Sgariboldi Giuseppe & C., 26823 Camairago (Lodi) (IT)
(72) Inventor: Sgariboldi, Giuseppe, 26845 Codogno (Lodi) (IT)
(74) Representative: Martegani, Franco

(56) References cited:
- EP-A- 0 562 693
- EP-A- 0 784 928
- EP-A- 0 860 108
- GB-A- 2 329 098

## Description

The present invention refers to an improved screw designed to be mounted on an apparatus for shredding and mixing fibrous products for the preparation of feed in zootechnics.

The invention also regards apparatuses for the shredding and mixing of fibrous products designed for the preparation of feed in zootechnics, which are equipped with the said screw.

The term "screw" is herein used to designate a shredding-mixing member with a shaft provided with coils, which may be either continuous or discontinuous, i.e., interrupted. On the crests of the said coils are fixed knives that shred the product.

In particular, the screw of the invention is structured in such a way as to obtain a perfect final processing of the product, which comes out soft and homogeneous, thus preventing stagnation of material and clogging, above all at the side of intake of the product between the wall of the tank, or box, and the screw, which causes undesired overloading of the shaft of the screw, with consequent possible turning-off of the motor and considerable damage to the drive members.

In these cases, the screw can be set in rotation again, for example by connecting its shaft to a different power take-off, much more powerful than the one normally used, which is able to overcome the enormous resistance due to the bale that is jammed between the screw and the side wall of the tank. In addition to presupposing the availability of the said much more powerful power source, this operation also entails considerable inconvenience and waste of time, with the risk of failure of the drive.

In order to eliminate the clogging, it is also possible to invert the direction of rotation of the motor, if the latter is pre-arranged for this purpose.

Known apparatuses that are used for the shredding and mixing of fibrous products designed for the preparation of feed in zootechnics are made up of a tank, or box, inside which members (for example screws and swifts) are mounted for shredding and mixing fibrous products, such as dry hay, silos hay, straw, etc., which are loaded from above inside the tank itself.

The said shredding and mixing members may be arranged inside the tank either horizontally or vertically, and the mixed product is discharged through a side hatch.

Apparatuses of the type briefly described above, equipped with vertical shredding and mixing members are, for example, described and illustrated in the Patent Application for Invention No. 41544 A/80, filed on March 17, 1980, and the Patent Application for Invention No. 41610 A/84 filed on July 26, 1984, both in the name of Tiziano Faccia.

Apparatuses with vertical screws are particularly suited for processing whole bales of large size.

The bale comes to rest on the coils of the screw and is generally processed without giving rise to any major clogging, also because very powerful motors are applied to these apparatuses.

Apparatuses with horizontal screws have a smaller height and width than those with vertical screws, and are suited to places where there is shortage of space.

Apparatuses are known having horizontal shredding members comprising a plurality of screws, for example one or two screws on the bottom of the tank and two or three screws set on top, which are designed to shred and mix the product imparting a to-and-fro movement on it such as to reduce to the minimum stagnation of material and undesired clogging.

These types of apparatuses, with a number of screws set alongside one another and set on top of one another, are expensive to manufacture, in that they require relatively complicated drive systems to transmit motion from a single motor-reducer unit to all the screws mounted inside the tank.

In addition, notwithstanding the provision of a plurality of screws set alongside and on top of one another, the shredding and mixing of the fibrous product are not fully satisfactory, in that inside the tank there remain even so dead areas where the material stagnates.

In order to overcome the above-mentioned drawbacks, apparatuses have been proposed of the type comprising a tank inside which means are mounted for shredding and mixing the said fibrous products. The shredding means consist of at least one screw which presents two sections possibly separated by an intermediate diaphragm or partition which is fixed to the shaft of the screw itself. The said screw is provided with a first section with right-handed helix and with a second section with left-handed helix, whilst the said tank comprises a partially cylindrical bottom where the screw is housed, from which bottom there extend a substantially vertical wall and an opposed, oblique, wall.

An apparatus of this type is, for example, described in the Patent IT-1243752 or EP 784928.

Operation of this type of apparatus has proved satisfactory. However, it may happen that in the intermediate area of the tank, at the height of the possible partition, up the vertical wall, undesired stagnation of material occurs, which may in turn cause the above-mentioned undesired clogging.

In order to eliminate the said stagnation of material, the solution has been resorted to of mounting a stirring device on the vertical wall of the tank, which acts centrally, between the right-handed and the left-handed sections of the underlying screw.

An apparatus of this type is, for example, described and illustrated in EP-562693.

However, not even is the provision of a stirring device of this sort - by itself - able to prevent the occurrence of clogging, above all when whole (bound) cylindrical bales are processed, i.e., ones that are not fragmented into individual portions.

The general purpose of the present invention is to overcome the above-mentioned drawbacks of the known art by providing a screw as set out in the characterizing portion of claim 1, said screw being structured in such a way as to prevent the bale getting jammed between the screw and the wall of the tank, and hence to prevent the undesired arrest of the motor applied on the shaft of the screw itself. Further embodiments of the invention are described in the dependent claims.

The structural and functional characteristics of the invention, and its advantages as compared to the known art, will emerge even more evidently from an examination of the following description referring to the attached schematic drawings, which show an example of a screw and apparatus made according to the principles of the present invention. In the drawings:
- Figure 1 is a perspective view illustrating a screw made according to the principles of the present invention;
- Figure 2 is a detail in enlarged perspective view illustrating a suspension element, shaped like a whisker, applied for suspending a bale, which is applied to the coils of the screw of Figure 1;
- Figures 3 and 4 are two views, in side elevation and front elevation, respectively, illustrating the "whisker" of Figure 2;
- Figure 5 is a schematic view illustrating, in cross section, the unsatisfactory behaviour of a screw of a known type in an apparatus of a known type;
- Figure 6 is a cross section like that of Figure 5, but illustrating the different behaviour of a screw made according to the present invention; and
- Figures from 7 to 9 are longitudinal cross-sectional views of the mode of operation of the screw according to the invention in its operating stages, from the beginning to the end of the process.

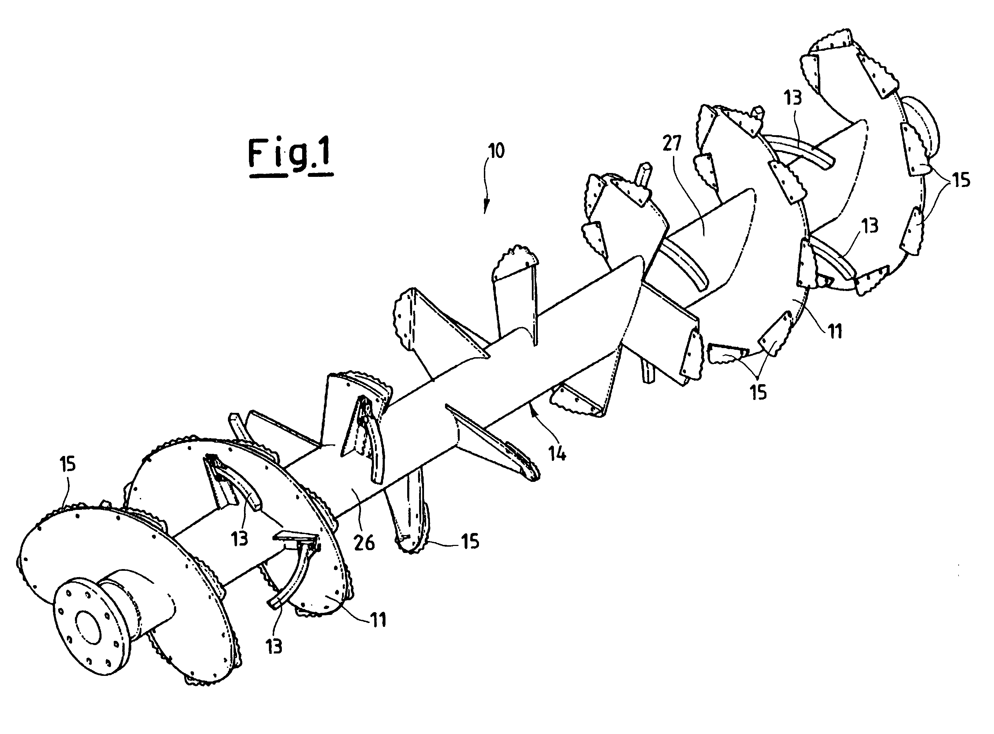

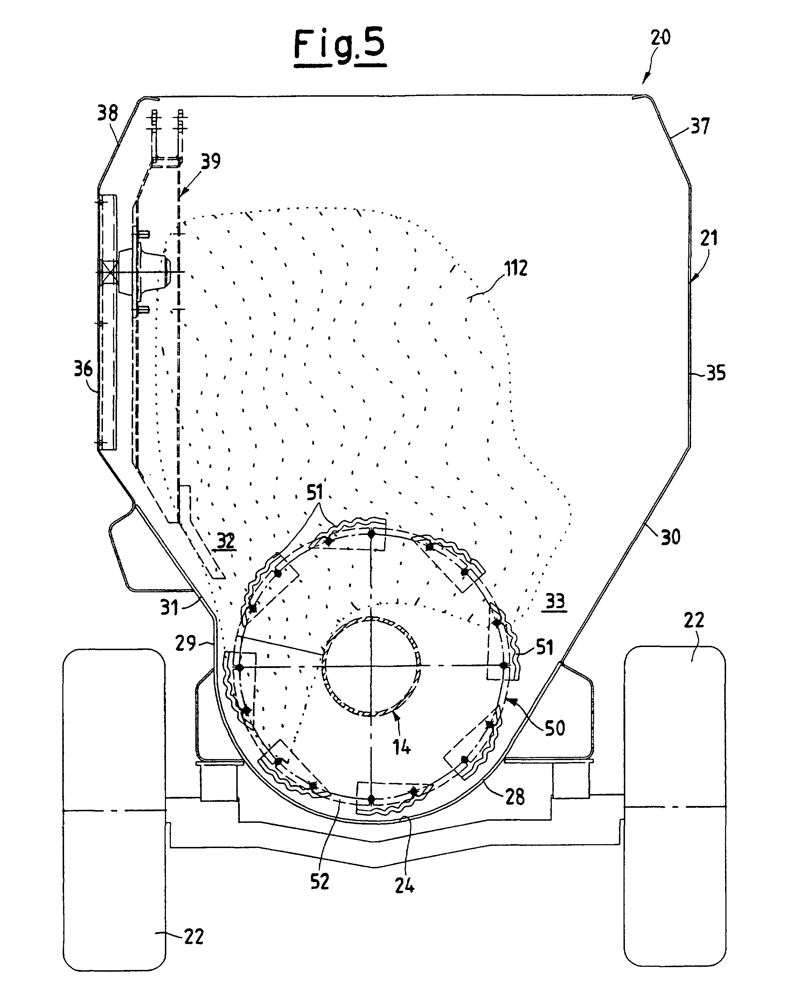

In Figure 1 of the drawings, the screw according to the invention is designated, as a whole, by 10, and is designed to be mounted on an apparatus, which may, for example, be of the type shown schematically in Figures 5-9 of the drawings.

An apparatus of this type is, for instance, described and illustrated in the Patent Application No. MI98A001755, filed in Italy on July 29, 1998, under the title: "Perfezionamenti alle apparecchiature per la trinciatura e miscelazione di prodotti fibrosi destinati alla preparazione di alimenti in zootecnia" ("Improvements to apparatuses for the shredding and mixing of fibrous products designed for the preparation of feed in zootechnics"), in the name of the present applicant.

The said apparatus for the shredding and mixing of fibrous products is illustrated schematically and designated by 20, and is structurally made up of a metal tank or box 21 mounted on wheels 22, for example designed to be attached to a traction means, such as a tractor or the like, by means of a draw bar 23.

However, the apparatus may be self-propelled or even fixed.

On the bottom of the tank 21, which consists of a half-cylindrical section 24, is housed the screw 10 according to the invention (Figure 1) comprising a shaft 14 with a right-hand section 26 and a left-hand section 27.

From the end regions 28, 29 of the said half-cylindrical section 24 constituting the bottom of the tank 21, there extend oblique wall sections 30, 31 which identify funnel-shaped areas 32, 33, respectively for input and output of the product being processed, assuming as the direction of rotation of the screw 25 the counter-clockwise direction indicated by the arrow 34.

The oblique wall sections 30, 31 terminate at the same height, and from them there extend respective vertical wall sections 35, 36, which terminate with converging edges 37, 38.

On the vertical wall section 36, at a point corresponding to the area 32 for input of the product to be shredded and mixed, a stirring unit is mounted, designated as a whole by 39.

The said stirring unit 39 may be, for example, of the type described and illustrated in the above-mentioned Patent Application No. MI98A001755.

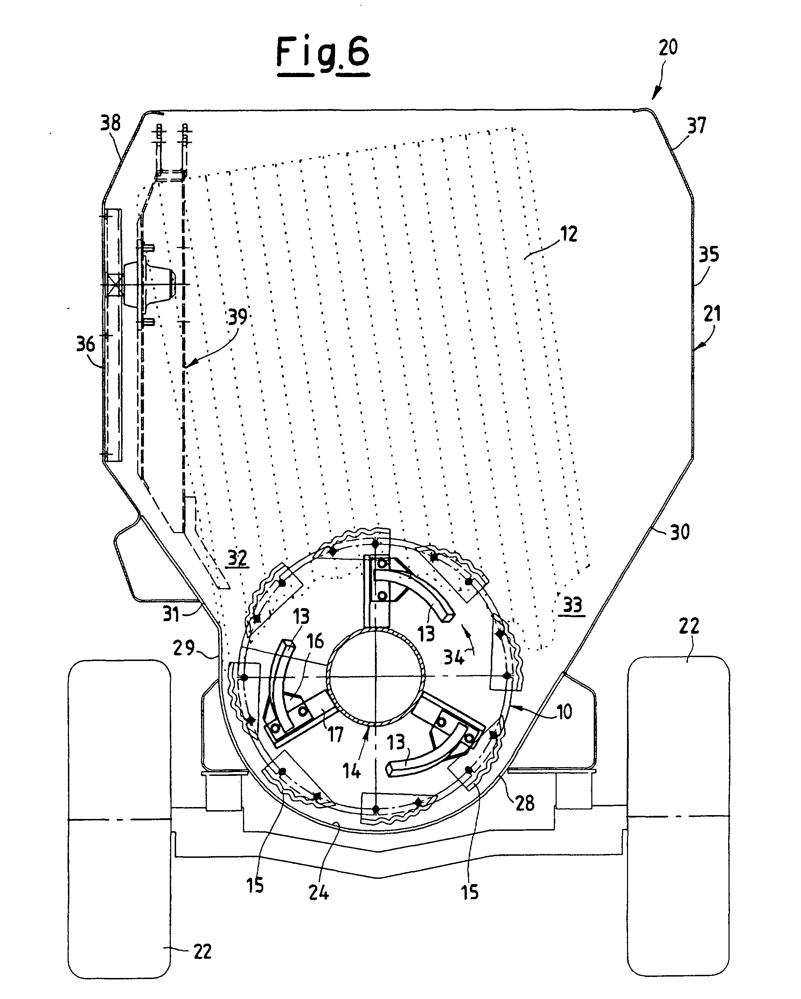

According to the present invention, between the coils 11 of the screw 10, suspension elements 13 are provided for keeping the fibrous product (bale 12) lifted up, which have the shape of whiskers 13 (Figures 6-9), applied on the rear face (i.e., not the pushing face) of the coils 11.

As may be clearly seen from the figures, the said "whiskers" 13 extend projecting from the coils 11 of the screw, obliquely from the bottom upwards, basically from the root of each coil 11 towards an area between two successive coils of the screw, terminating at approximately one third of the distance between two successive coils 11.

The free end of each one of the said "whiskers" 13 is at a height slightly smaller than that of the crest of the coils 11 of the screw, where knives 15 are fixed.

A plurality of the said "whiskers" 13, for example three, appropriately set apart from each other, can be mounted on each coil 11 of the screw 10. Of course, as the diameter of the screw increases, also the number of "whiskers" 13 required will increase.

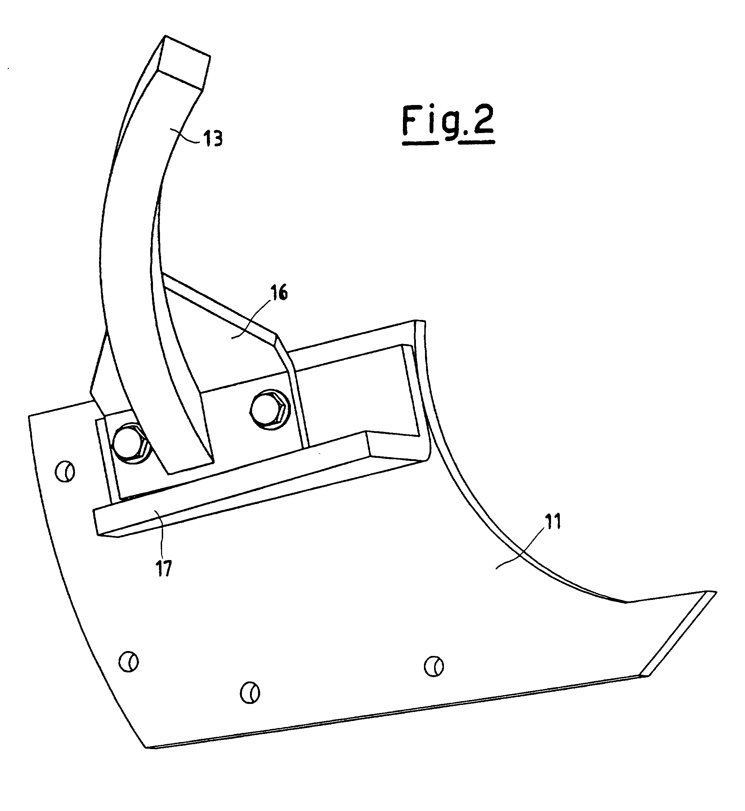

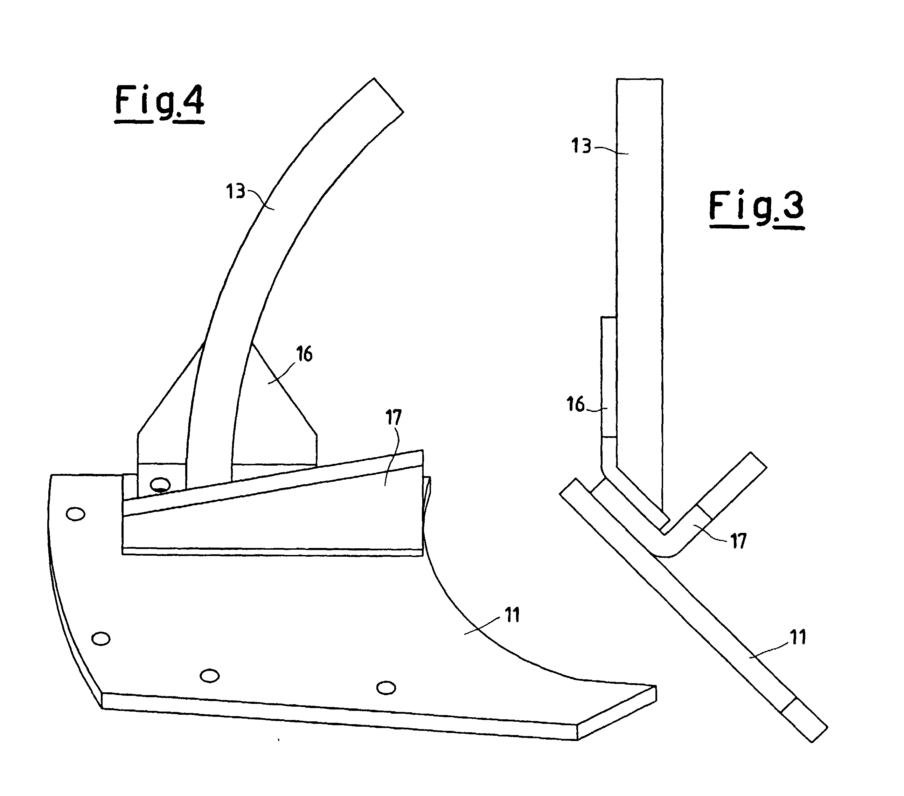

Each "whisker" 13 can be fixed to the coil 11 of the screw 10 by bolting a flange 16 of each "whisker" 13 on the coil 11 itself, with the interposition of an angular strengthening plate 17 (Figures 2-4).

Operation of the screw according to the invention is clear from what is schematically illustrated in Figures 6-9 of the drawings, and is in brief as described below.

Figure 5 illustrates the aggressive behaviour, on the bale 112 consisting of a fibrous product, of a screw 50 of a known type, i.e., not provided with the "whiskers" 13 according to the invention.

In such an apparatus, the bale 112 is immediately attacked by the knives 51 of the screw, wedging itself between two successive coils, which may result in the bale 112 getting jammed between the screw 50 and the wall of the box, with consequent arrest of the motor, and this leads to all the problems mentioned in the preamble of the description.

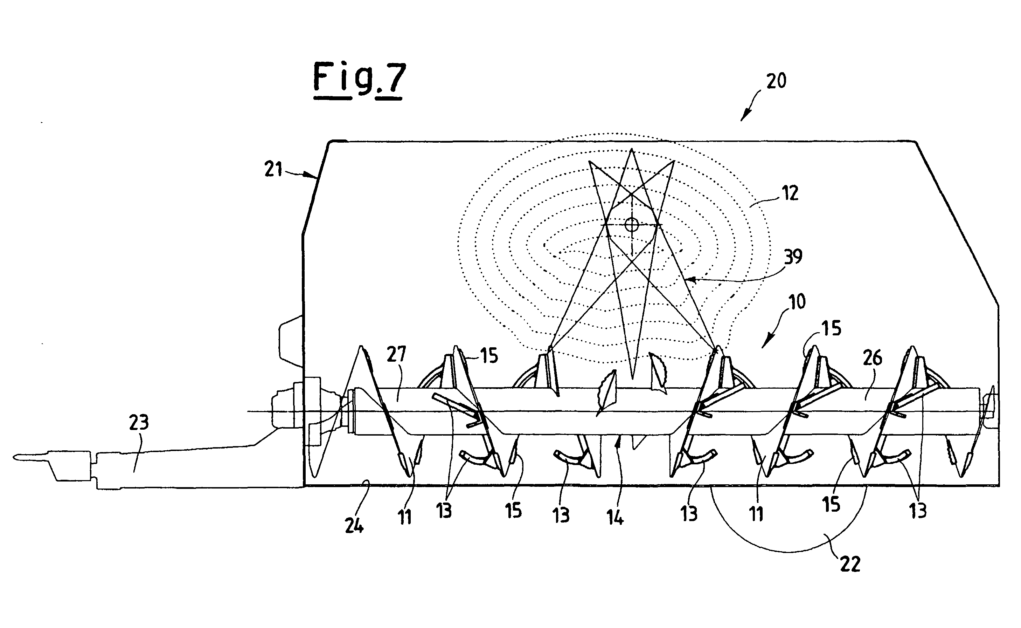

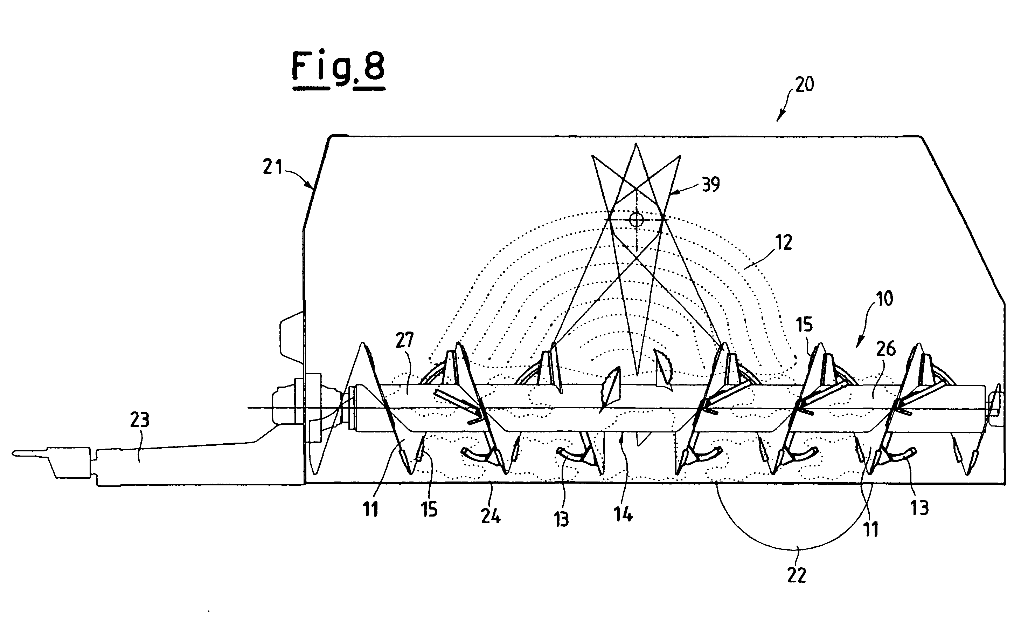

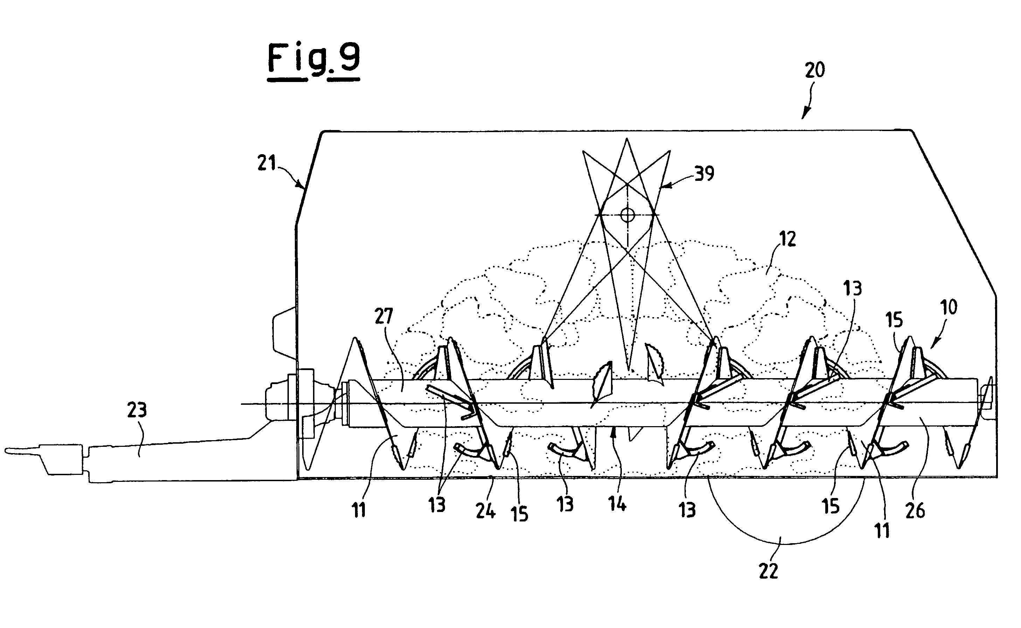

Figure 6, instead, shows how, in a screw provided with "whiskers" 13 between the coils 11 according to the teachings of the present invention, the bale 12 that is introduced is suspended and is processed gradually and more gently by the knives 15 of the screw, as shown in Figure 7, so that it breaks up bit by bit, as illustrated in Figure 8, until complete shredding and mixing is achieved, as shown in figure 9.

In this way, the purpose mentioned in the preamble of the description is achieved, namely, to provide, in an apparatus for shredding and mixing fibrous products, a screw that is able to shred and mix the bale of product gently, so as to prevent the aforementioned clogging. The scope of the invention is defined by the ensuing claims.

## Claims

1. Screw for the shredding and mixing of fibrous products, of the type comprising a shaft (14) on which means (15) for shredding and mixing the said fibrous products are wound in coils (11), wherein between the said means (15) of the screw, suspension elements (13) for keeping the fibrous product lifted up are provided, said means (15) being wound on the shaft (14) so as to form coils (11), **characterized in that** the said suspension elements (13) have an arcuate configuration, said suspension elements (13) extending projecting in an oblique direction and upwards, basically from the root of each coil (11), is bolted onto the respective coil (11) by means of a flange (16) of each suspension elements (13) and with the interposition of an angular strengthening plate (17).

2. Screw according to Claim 1, **characterized in that** the said suspension elements (13) extend projecting from the rear face (i.e., not the pushing face) of the coils (11) of the screw.

3. Screw according to Claim 1, **characterized in that** the said suspension elements (13) terminate at approximately one third of the distance between two successive coils (11) of the said screw (10).

4. Screw according to Claim 3, **characterized in that** the free ends of the said suspension elements (13) are at a height slightly lower than that of the crest of the coils (11) of the screw (10).

5. Screw according to Claim 4, **characterized in that** on each coil (11), a plurality of the said suspension elements (13) is mounted.

6. Screw according to Claim 5, **characterized in that** the said suspension elements (13) are three in number and are appropriately set apart from each other

7. Apparatus for the shredding and mixing of fibrous products designed for the preparation of feed in zootechnics, of the type comprising a box or tank (21) inside which are mounted means for the mixing and shredding of the said fibrous products, **characterized in that** the said mixing and shredding means consist of a screw (10) made according to any one of Claims 1-6.

8. Apparatus for the shredding and mixing of fibrous products designed for the preparation of feed in zootechnics, of the type comprising, in combination: a tank (21) inside which are mounted means for the mixing and shredding of the said fibrous products, in which the said means consist of at least one member for the shredding and mixing of the said products, which presents a first section (26) with right-handed helix and a second section (27) with left-handed helix and in which the said tank (21) comprises a partially cylindrical bottom (24) where the said member is housed, from which bottom (24) there extend oblique wall sections (30, 31) which identify funnel-shaped areas (32, 33), respectively for input and output of the product being processed, the said oblique walls (30, 31) proceeding with vertical wall sections (35, 36), set corresponding to the said area (32), on the said vertical wall (36) - between the said sections (26, 27) -, there being mounted a stirring device (39) capable of preventing any possible stagnation of the product being processed in the input area (32), **characterized in that** the said member for shredding and mixing consists of a screw (10) made according to any one of Claims 1-6.

## Patentansprüche

1. Schraube zum Zerfetzen bzw. Schreddern und Mischen von Faserprodukten des Typs, der einen Schaft bzw. eine Welle (14) umfasst, auf dem bzw. auf der ein Mittel (15) um die Faserprodukte zu zerfetzen bzw. zu schreddern und zu mischen, in Windungen (11) gewunden ist, wobei zwischen dem Mittel (15) der Schraube Hängeelemente (13) vorgesehen sind, um die Faserprodukte nach oben gehoben zu halten, wobei das Mittel um den Schaft bzw. die Welle (14) so gewunden ist, um Windungen (11) auszubilden, **dadurch gekennzeichnet, dass** die Hängeelemente (13) eine gebogene Konfiguration aufweisen, wobei die Hängeelemente (13) sich erstrecken, wobei sie in einer schrägen Richtung und nach oben vorstehen, und zwar im Wesentlichen von der Wurzel einer jeden Windung (11) ausgehend, und dadurch, dass ein jedes der Hängeelemente (13) direkt auf der jeweiligen Windung (11) fixiert ist und auf der jeweiligen Windung (11) mittels eines Flansches (16) eines jeden Hängeelementes (13) verschraubt bzw. verbolzt ist und wobei eine winkelige Verstärkungsplatte (17) dazwischen gelagert ist.

2. Schraube nach Anspruch 1, **dadurch gekennzeichnet, dass** die Hängeelemente (13) sich erstrecken, wobei sie von der Rückfläche (d.h. nicht der Schiebefläche) der Windungen (11) der Schraube vorstehen.

3. Schraube nach Anspruch 1, **dadurch gekennzeichnet, dass** die Hängeelemente (13) bei etwa einem Drittel des Abstandes zwischen zwei aufeinanderfolgenden Windungen (11) der Schraube (10) enden.

4. Schraube nach Anspruch 3, **dadurch gekennzeichnet, dass** die freien Enden der Hängeelemente (13) sich bei einer Höhe befinden, die etwas niedriger ist, als jene des Kopfteils der Windungen (11) der Schraube (10).

5. Schraube nach Anspruch 4, **dadurch gekennzeichnet, dass** auf jeder Windung (11) eine Vielzahl der Hängeelemente (13) angebracht ist.

6. Schraube nach Anspruch 5, **dadurch gekennzeichnet, dass** die Hängeelemente (13) drei sind und geeignet voneinander beabstandet festgelegt sind.

7. Apparat zum Zerfetzen bzw. Schreddern und Mischen von Faserprodukten, der gestaltet ist, um Futter in der Zootechnik zu bereiten, und zwar des Typs, der ein Abteil bzw. einen Behälter oder einen Tank (21) umfasst, innerhalb dem Mittel zum Mischen und Schreddern bzw. Zerfetzen der Faserprodukte angebracht sind, **dadurch gekennzeichnet, dass** das Mittel zum Mischen und Schreddern bzw. Zerfetzen aus einer Schraube (10), die gemäß einem der Ansprüche 1 bis 6 gemacht ist, besteht.

8. Apparat zum Schreddern bzw. Zerfetzen und Mischen von Faserprodukten, der zur Bereitung von Futter in der Zootechnik gestaltet ist, und zwar des Typs, der in Kombination umfasst: einen Tank (21), innerhalb dem ein Mittel zum Mischen und Schreddern bzw. Zerfetzen der Faserprodukte angebracht sind, wobei das Mittel aus wenigstens einem Glied zum Schreddern bzw. Zerfetzen und Mischen der Produkte besteht, das einen ersten Abschnitt (26) mit einer rechtsläufigen Spirale und einen zweiten Abschnitt (27) mit einer linksläufigen Spirale darstellt und wobei der Tank (21) einen teilweise zylindrischen Boden (24) umfasst, wo das Glied untergebracht ist, wobei von diesem Boden (24) sich schräge Wandabschnitte (30, 31) erstrecken, die trichterförmige Bereiche (32, 33) identifizieren bzw. Kennzeichnen, die jeweils zum Eingeben und Ausgeben des Produkts dienen, das verarbeitet wird, wobei die schrägen Wände (30, 31) mit vertikalen Wandabschnitten (35, 36), die entsprechend dem Bereich (32) festgelegt sind, fortschreiten, wobei auf der vertikalen Wand (36) - zwischen den Abschnitten (26, 27) - eine Umrührvorrichtung (39) angebracht ist, die dazu in der Lage ist, einen möglichen Stillstand des Produkts, das verarbeitet wird, in dem Eingabebereich (32) zu verhindern, **dadurch gekennzeichnet, dass** das Glied zum Schreddern bzw. Zerfetzen und Mischen aus einer Schraube (10) besteht, die gemäß einem der Ansprüche 1 bis 6 gemacht ist.

## Revendications

1. Vis pour le déchiquetage et le mélange de produits fibreux, du type comprenant un arbre (14) sur lequel des moyens (15) pour le déchiquetage et le mélange desdits produits fibreux sont enroulés en bobines (11), dans laquelle entre lesdits moyens (15) de la vis, des éléments de suspension (13) destinés à maintenir le produit fibreux élevé sont disposés, lesdits moyens (15) étant enroulés sur l'arbre (14) de manière à former les bobines (11), **caractérisée en ce que** lesdits éléments de suspension (13) ont une configuration arquée, lesdits éléments de suspension (13) s'étendant en saillie dans une direction oblique et vers le haut, basiquement depuis la racine de chaque bobine (11), et **en ce que** chacun desdits éléments de suspension (13) est directement fixé sur la bobine respective (11), et est boulonné sur la bobine respective (11) au moyen d'une bride (16) de chaque élément de suspension (13) et avec l'interposition d'une plaque (17) de renforcement angulaire.

2. Vis selon la revendication 1, **caractérisée en ce que** lesdits éléments de suspension (13) s'étendent en saillie à partir de la face arrière (à savoir non la face de poussée) des bobines (11) de la vis.

3. Vis selon la revendication 1, **caractérisée en ce que** lesdits éléments de suspension (13) se terminent à approximativement un tiers de la distance entre deux bobines successives (11) de ladite vis (10).

4. Vis selon la revendication 3, **caractérisée en ce que** les extrémités libres desdits éléments de suspension (13) sont à une hauteur légèrement inférieure à celle de la crête des bobines (11) de la vis (10).

5. Vis selon la revendication 4, **caractérisée en ce que** sur chaque bobine (11), une pluralité desdits éléments de suspension (13) est montée.

6. Vis selon la revendication 5, **caractérisée en ce que** lesdits éléments de suspension (13) sont de trois en nombre et sont séparés les uns des autres de manière appropriée.

7. Appareil pour le déchiquetage et le mélange de produits fibreux conçu pour la préparation de l'alimentation dans la zootechnique, du type comprenant une boîte ou réservoir (21) à l'intérieur duquel sont montés des moyens pour le mélange et le déchiquetage desdits produits fibreux, **caractérisé en ce que** lesdits moyens de mélange et de déchiquetage sont constitués d'une vis (10) fabriquée selon l'une quelconque des revendications 1 à 6.

8. Appareil pour le déchiquetage et le mélange de produits fibreux conçu pour la préparation d'alimentation dans la zootechnique, du type comprenant, en combinaison : un réservoir (21) à l'intérieur duquel sont montés les moyens pour le mélange et le déchiquetage desdits produits fibreux, dans lequel lesdits moyens sont constitués d'au moins un élément pour le déchiquetage et le mélange desdits produits, qui présente une première section (26) avec une hélice à main droite et une seconde section (27) avec une hélice à main gauche et dans lequel ledit réservoir (21) comprend un fond (24) partiellement cylindrique où ledit élément est logé, à partir duquel fond (24) s'étendent les sections (30, 31) de paroi oblique qui identifient des zones (32, 33) en forme de tunnel, respectivement pour l'entrée et la sortie du produit en cours de traitement, lesdites parois (30, 31) obliques poursuivant des sections (35, 36) de paroi verticale, établies en correspondance à ladite zone (32) sur ladite paroi verticale (36) - entre lesdites sections (26, 27) -, il est monté un dispositif d'agitation (39) capable d'empêcher toute stagnation possible du produit en cours de traitement dans la zone (32) d'entrée, **caractérisé en ce que** ledit élément pour le déchiquetage et le mélange est constitué d'une vis (10) fabriquée selon l'une quelconque des revendications 1 à 6.
